# EUROPEAN PATENT SPECIFICATION

(11) **EP 4 097 004 B1**
(45) Date of publication and mention of the grant of the patent: **18.11.2026**
(21) Application number: 21748185.2
(22) Date of filing: 29.01.2021
(51) Int. Cl.: B64C 27/28, B64C 29/00, B64C 27/52, B64C 39/02, B64C 27/26, G05D 1/00, B64D 27/24, B64C 27/30

(54) **AIRCRAFT WITH TILTING FAN ASSEMBLIES**
FLUGZEUG MIT KIPPLÜFTERBAUGRUPPEN
AÉRONEF À ENSEMBLES VENTILATEURS INCLINABLES

(30) Priority: 31.01.2020 US 202062968852 P
(43) Date of publication of application: 07.12.2022
(60) Divisional application: 26206480.1 / 4 834 758; 26206483.5 / 4 834 759
(73) Proprietor: Wisk Aero LLC, Mountain View, CA 94043 (US)
(72) Inventor: TIGHE, James Joseph, Mountain View, California 94043 (US); TZARNOTZKY, Uri, Mountain View, California 94043 (US)
(74) Representative: WP Thompson
(86) International application number: PCT/US2021/015789
(87) International publication number: WO 2021/155208

(56) References cited:
- EP-A1- 3 466 812
- WO-A1-2018/064209
- WO-A1-2019/034765
- WO-A1-2019/202325
- WO-A1-2019/211875
- DE-A1- 102014 000 509
- DE-A1- 102017 118 965
- US-A- 3 081 964
- US-A1- 2003 094 537
- US-A1- 2015 136 897
- US-A1- 2018 105 267
- US-A1- 2018 215 465
- US-A1- 2020 164 972
- US-A1- 2020 239 134

## Description

### RELATED APPLICATIONS

This application claims benefit under 35 USC§ 119(e) to U.S. Provisional Patent Application No. 62/968,852 filed January 31, 2020 and entitled "Aircraft with Tilting Fans".

### FIELD

The described embodiments relate generally to an aircraft with vertical takeoff and landing capability. In particular, the embodiments provide an aircraft with one or more tilting fan assemblies which provide vertical and horizontal thrust in a controlled fashion for hover, transition and cruise flight.

### BACKGROUND

Aircrafts with vertical takeoff and landing capability need lift fans to be able to hover, takeoff and land vertically. However, such aircrafts also need forward thrust to be able to cruise in the air. Thrust produced in the vertical direction provides lift to the vehicle; thrust produced horizontally provides forward movement. A vertical takeoff and landing (VTOL) aircraft should produce both vertical and horizontal thrust, and be able to control these forces in a balanced fashion.

EP 3466812 A1 describes a tiltrotor aircraft has a vertical takeoff and landing flight mode and a forward flight mode. The tiltrotor aircraft includes a longitudinally extending fuselage with a wing extending laterally therefrom having oppositely disposed wing tips distal from the fuselage.

WO 2019/202325 A1 describes a VTOL vehicle that includes: a fuselage having longitudinally a front section, a central section and a rear section; a first lifting surface comprising two wings respectively secured to opposite sides of the rear section of the fuselage; a second lifting surface comprising two wings respectively secured to opposite sides of the front section of the fuselage; where each wing and/or fuselage section comprises at least one engine module, each of the engine modules being pivotally coupled to the wing and/or fuselage and each engine module being independently controlled for transitioning between a vertical mode of flight and a horizontal mode of flight.

DE 102017118965 A1 describes a vertically-launched aircraft, preferably unmanned aerial vehicle (UAV), drone and / or unmanned aerial vehicle (UAS), comprising: a rigid wing, which is oriented substantially horizontally both in hover and in horizontal flight and allows aerodynamic horizontal flight, and with respect to the center of mass of the aircraft, at least one horizontal rear-view controllable drive comprising a rear engine and a rear propeller driven by the rear engine and at least one seen in horizontal flight direction front controllable drive, comprising a front motor and a front motor driven propeller, wherein the motors are preferably electric motors, and wherein at least a part of the drives are pivotable by means of a respective pivoting mechanism between a vertical start position for the hover and a horizontal flight position for the horizontal or cruise.

WO 2019/211875 A1 describes an energy efficient VTOL aircraft capable of flying like helicopter as well as fixed wing airplane based on requirement. The propulsion for the aircraft is either all electric or hybrid/electric. The aircraft comprises vertical and tilting rotors. US 2018/105267 A1 discloses a multicopter including a fuselage and a plurality of rotors. At least some of the rotors are disposed on opposite sides of the fuselage and each is oriented at a corresponding angle to a substantially horizontal plane of the aircraft, the angle being of a magnitude such that a plane of rotation of the rotor does not intersect at least a critical portion of the fuselage.

### SUMMARY

According to an aspect of the present invention, there is provided an aircraft according to any of claims 1 to 4.

According to an aspect of the present invention, there is provided a method according to any of claims 5 to 12.

### BRIEF DESCRIPTION OF THE DRAWINGS

FIG. 1A depicts a simplified schematic of an exemplary VTOL aircraft, according to various embodiments.
FIG. 1B illustrates top, planar, side and front views (clockwise starting from the top left corner) of the VTOL aircraft with a pair of tilting fan assemblies in the forward flight position, according to various embodiments.
FIG. 1C illustrates top, planar, side and front views (clockwise starting from the top left corner) of the VTOL aircraft with a pair of tilting fan assemblies in the vertical lift position, according to various embodiments.
FIG. 2B illustrates top, planar, side and front views (clockwise starting from the top left corner) of the VTOL aircraft with front tilting fan assemblies in the vertical lift position, according to various embodiments.
FIG. 3A illustrates top, planar, side and front views (clockwise starting from the top left corner) of the VTOL aircraft with tilting fan assemblies in the forward flight position, according to various embodiments.
FIG. 3B illustrates top, planar, side and front views (clockwise starting from the top left corner) of the VTOL aircraft with tilting fan assemblies in the vertical lift position, according to various embodiments.
FIG. 4 is a flow chart illustrating an embodiment of a process to control flight of a VTOL aircraft through a transition between vertical and forward flight, according to various embodiments.

### DETAILED DESCRIPTION

Techniques disclosed herein relate generally to an aircraft with a plurality of lift fan assemblies, and a plurality of tilting fan assemblies. More specifically, techniques disclosed herein provide a VTOL aircraft with a plurality of lift fan assemblies for vertical movement, and one or more tilting fan assemblies that are configured to tilt between a forward flight position and a vertical lift position for forward movement. Various inventive embodiments are described herein, including methods, processes, systems, devices, and the like.

In order to better appreciate the features and aspects of the fan assembly orientations for aircrafts according to the present disclosure, further context for the disclosure is provided in the following section by discussing particular implementations of a VTOL aircraft according to embodiments of the present disclosure. These embodiments are for example only and other fan configurations can be employed in connection with the VTOL aircraft described herein.

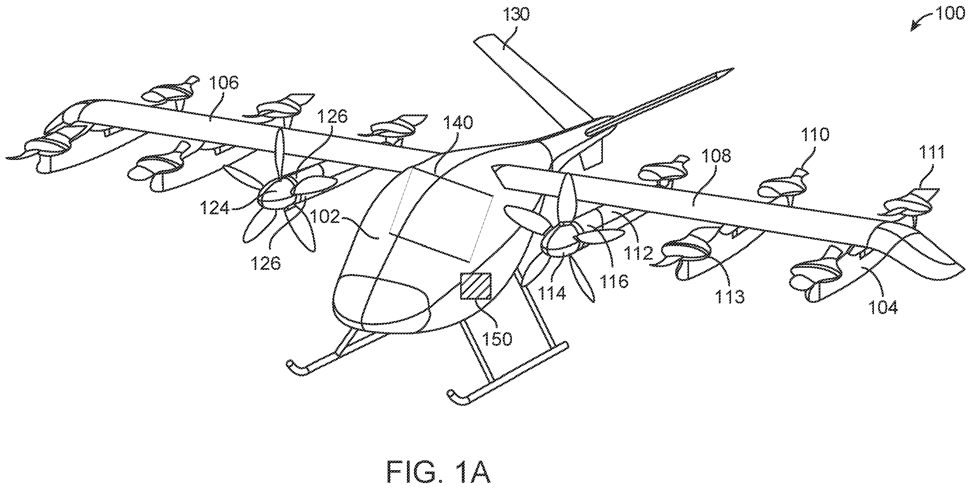

FIG. 1A depicts a simplified schematic of an exemplary VTOL aircraft 100 of an illustrative example not falling under the scope of the appended claims. According to various illustrative examples, the VTOL aircraft 100 may be an electrically powered aircraft. In some illustrative examples, the VTOL aircraft 100 may be configured to carry one or more passengers and/or cargo, and may be controlled automatically and/or remotely (e.g. may not require an on-board pilot to operate the aircraft, and may be controlled based on a control signal or instruction received from a remote entity). In the example shown in FIG. 1A, the VTOL aircraft 100 includes a fuselage 102 which may include a cabin section 140 for carrying passengers and/or cargo. For example, the cabin section 140 may be provided toward a nose of the VTOL aircraft 100. The VTOL aircraft 100 may also include a horizontal stabilizer (e.g. a tailplane) 130 coupled to a rear end of the fuselage 102. The tailplane 130 may be in any suitable shape or form. For example, the tailplane 130 may be V-shaped (e.g. V-tail). A pair of wings (e.g. a first wing 106 and a second wing 108) are coupled to opposite sides of the fuselage 102. In some illustrative examples, the pair of wings may be coupled to the fuselage in a high-wing configuration. That is, the pair of wings may be mounted on an upper portion of the fuselage, as shown in FIG. 1A. A plurality of fan assemblies (e.g. lift fan assemblies and/or tilting fan assemblies) may be coupled to the pair of wings. For example, the VTOL aircraft 100 may include a total of 12 fan assemblies (e.g. fans, rotors, propellers) divided equally between the wings. In some illustrative examples, the fan assemblies may be coupled directly to the wings. In other embodiments, the fan assemblies may be mounted on support structures 104, such as booms that may be coupled to an underside of the wings 106, 108.

According to some illustrative examples, each wing 106, 108 may include two support structures (e.g. booms) 104 each including a pair of lift fan assemblies (also known as "lift fans") 110 mounted thereon. For example, each lift fan assembly maybe coupled to an end of the boom 104 such that a first lift fan assembly 113 is in front of the wing 106, 108 and a second lift fan assembly 110 is aft of the wing 106, 108. In some illustrative examples, the two lift fan assemblies 110, 113 coupled to opposite ends of the booms 104 may have their blades mounted with opposite angles of attack and thus, the two lift fan assemblies 110, 113 may spin in opposite directions. The lift fan assemblies 110, 113 are configured to create a vertical lift for the VTOL aircraft 100.

According to various illustrative examples, each lift fan assembly 110 may be in form of an electric motor-driven rotor (e.g. a combined fan and motor), and may be configured to move the aircraft 100 in the vertical direction during, for example, take-off, hovering and/or landing. The rotor may comprise blades attached to a hub, or may be manufactured as a single piece with an integral hub. The hub provides a central structure to which the blades connect, and in some illustrative examples is made in a shape that envelops the motor. In some illustrative examples the motor parts are low-profile so that the entire motor fits within the hub of the rotor, presenting lower resistance to the air flow when flying forward. The rotor is attached to the rotating part of the motor. The stationary part of the motor is attached to the boom 104. In some illustrative examples the motor is a permanent magnet motor and is controlled by an electronic motor controller. The electronic motor controller sends electrical currents to the motor in a precise sequence to allow the rotor to turn at a desired speed or with a desired torque.

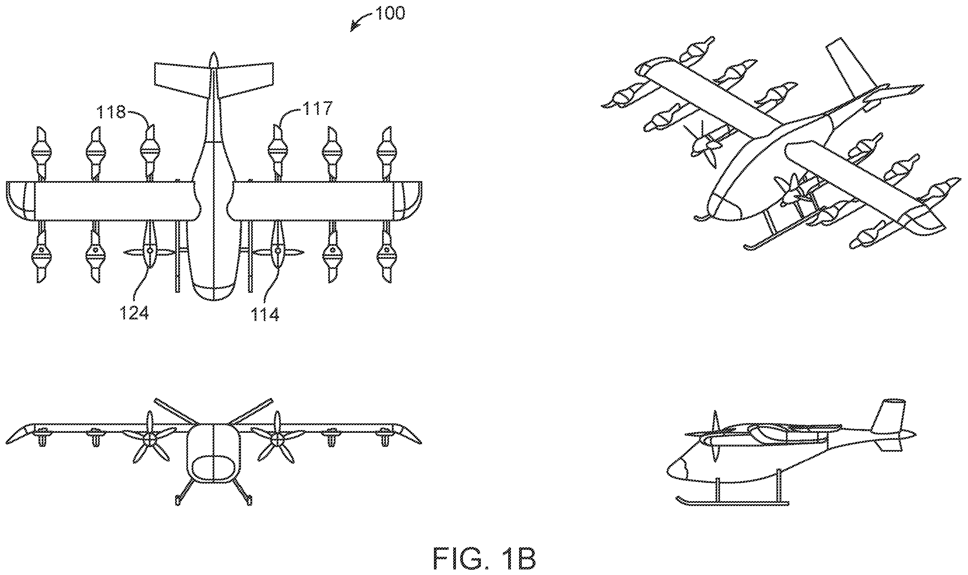

The lift fan assembly 110 may have any suitable number of blades that may be oriented in a predetermined manner. The orientation of the lift fan assemblies may be fixed (e.g. the lift fan assemblies 110 may be mounted in a fixed position relative to the wings 106, 108). In some illustrative examples, one or more of the lift fan assemblies 110 may be configured to be repositioned relative to the wings 106, 108 manually or in response to a control signal (e.g. from a control system 150, such as a flight control system, controlling the VTOL aircraft 100). According to various illustrative examples, the lift fan assembly 110 may have 2 blades having a predetermined angle of attack. In some illustrative examples, two adjacent lift fan assemblies (e.g. lift fan assembly 110 and lift fan assembly 111) may have opposite angle of attacks such that the two adjacent fan assemblies spin in opposite directions. The two adjacent lift fan assemblies may be on a same wing (e.g. lift fan assemblies 110 and 111 in FIG. 1A) or on opposite wing (e.g. lift fan assemblies 117 and 119 in FIG. 1B). According to various illustrative examples, a first subset of the lift fan assemblies may spin in a first direction, and a second subset (e.g. remainder) of the lift fan assemblies may spin in a second direction, opposite to the first direction.

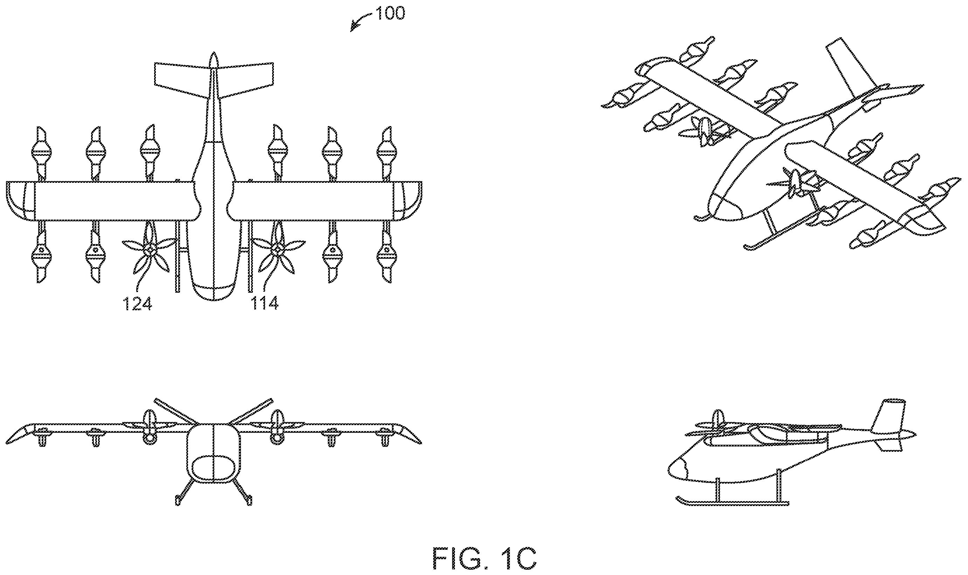

In some illustrative examples, each wing 106, 108 may include at least one support structure (e.g. boom) 112 carrying at least one tilting fan assembly 114 (also known in various embodiments as "propeller assembly" or "propeller fan assembly"). The tilting fan assembly 114 is configured to move between a forward flight position (as illustrated in FIG. 1B) and a vertical lift position (as illustrated in FIG. 1C). The boom 112 with the at least one tilting fan assembly 114 may be in addition to or instead of the boom(s) carrying lift fan assemblies. The tilting fan assembly 114 may be switched (e.g. rotated) between a forward flight position (illustrated in FIGs. 1A-1B) and a vertical lift position (illustrated in FIG. 1C). The tilting fan assembly 114 may be coupled to the boom 112 via a tilting mechanism 116 including, for example, motors and coupling mechanisms. In the forward flight position, the tilting fan assembly 114 may be substantially in a vertical orientation with respect to the fuselage 102. In the vertical lift position, the tilting fan assembly 114 may be substantially in a horizontal orientation with respect to the fuselage 102.

Each tilting fan assembly 114 may include a combined rotor and motor. The rotor may comprise blades attached to a hub, or may be manufactured as a single piece with an integral hub. The hub provides a central structure to which the blades connect, and in some illustrative examples is made in a shape that envelops the motor. In some illustrative examples the motor parts are low-profile so that the entire motor fits within the hub of the rotor, presenting lower resistance to the air flow when flying forward. The rotor is attached to the rotating part of the motor. The stationary part of the motor is attached to the boom 112 or other part of the fuselage 102. In some illustrative examples the motor is a permanent magnet motor and is controlled by an electronic motor controller. The electronic motor controller sends electrical currents to the motor in a precise sequence to allow the rotor to turn at a desired speed or with a desired torque. The tilting fan assembly 114 may have any suitable number of blades that may be oriented in a predetermined manner. For example, the tilting fan assembly 114 may have 5 blades having a predetermined angle of attack.

According to various illustrative examples, the tilting fan assembly 114 on the first wing 108 may tilt simultaneously with the tilting fan assembly 124 on the second wing 106. For example, the control system 150 of the aircraft may control at least a subset of the plurality of tilting fan assemblies simultaneously. That is, the control system 150 may operate the respective tilting mechanisms 116 and 126 substantially at a same time. In some illustrative examples, the tilting mechanisms 116 and 126 may be operated independently from each other. According to some illustrative examples, the control system 150 may be configurable to control the VTOL aircraft 100 (e.g. control the position of the tilting fan assemblies) automatically and/or remotely (e.g. via a control signal received from a remote entity, such as a remote controller, a remote pilot or a remote control tower). In various illustrative examples, the control system 150 comprises one or more processors configured to perform the processing and control functions described herein.

In some illustrative examples, each wing 106, 108 may also include at least one support structure (e.g. boom) 112 carrying one lift fan assembly 110 (e.g. an aft fan assembly) and one tilting fan assembly 114. For example the lift fan assembly 110 may be coupled aft of the wing 106, 108 and the tilting fan assembly 114 may be coupled forward of the wing 106, 108. According to various illustrative examples, a plurality of lift fan assemblies may be coupled to a trailing edge of the pair of wings 106, 108 and/or a plurality of tilting fan assemblies may be coupled to a leading edge of the pair of wings 106, 108 via one or more tilting mechanism(s).

The exemplary VTOL aircraft 100 illustrated in FIGs. 1A-1C may include a total of twelve fan assemblies: ten lift fan assemblies and two tilting fan assemblies. In some illustrative examples, at least one (or preferably a pair) of the fan assemblies of the exemplary VTOL aircraft are tilting fan assemblies. The tilting fan assemblies 114 and 124, when in the forward flight position, may provide the thrust for (and/or transition to) forward flight, climb, descent, and cruise. The lift fan assemblies 110 provide enough thrust to lift the aircraft off the ground and maintain control, for example during takeoff, hovering and/or landing. According to various illustrative examples, the lift fan assemblies 110 may stop operating during the forward flight of the VTOL aircraft 100.

One or more battery units 135 may be coupled to the VTOL aircraft 100 to power the fan assemblies (the lift fan assemblies and the tilting fan assemblies). More specifically, the fan assemblies may be driven by electric motors that are powered by a power system including the one or more battery units 135. In some illustrative examples, each fan assembly may have a dedicated battery unit 135. The battery units 135 may be provided on booms carrying the fan assemblies, within the fuselage or a combination thereof. Each battery unit 135 may include a plurality of battery cells configured to power the fan assemblies. Accordingly, the VTOL aircraft 100 may be an electric aircraft. In alternative illustrative examples, the VTOL aircraft 100 may be a hybrid-electric aircraft.

FIG. 1B illustrates top, planar, side and front views (clockwise starting from the top left corner) of the VTOL aircraft 100 with a pair of tilting fan assemblies 114, 124 in the forward flight position.

FIG. 1C illustrates top, planar, side and front views (clockwise starting from the top left corner) of the VTOL aircraft 100 with a pair of tilting fan assemblies 114, 124 in the vertical lift position.

The control system 150 (e.g. the flight control system) coupled to the aircraft 100 may be configured to control the plurality of tilting fan assemblies between the vertical lift position and the forward flight position. For example, the control system 150 may be configurable to control the tilting mechanism(s) 116, 126 to switch the positioning of the tilting fan assemblies 114, 124 from the forward flight position (illustrated in FIGs. 1A-1B) to the vertical lift position (illustrated in FIG. 1C); as well as from the vertical lift position (illustrated in FIG. 1C) to the forward flight position (illustrated in FIGs. 1A-1B). In some illustrative examples, the control system 150 may receive flight data from one or more sensors (e.g. sensor measuring air temperature, electric motor temperature, airspeed of the aircraft, etc.), computers, and other input/output devices coupled to the aircraft. The control system 150 may then control the tilting fan assemblies 114, 124 between the two positions based on sensor data and/or flight data received from the sensors (e.g. sensor measuring air temperature, electric motor temperature, airspeed of the aircraft, etc.), computers, and other input/output devices coupled to the aircraft.

According to various illustrative examples, the control system 150 may be configurable to receive a flight instruction, such as a takeoff, hover, cruise or landing instruction. The control system 150 may then determine a position of the plurality of tilting fan assemblies, and control one or more of the plurality of tilting fan assemblies between the vertical lift position and the forward flight position based on the flight instruction. During the operation of the VTOL aircraft 100, the control system 150 may be configurable to continuously monitor the position of the plurality of tilting fan assemblies in view of the flight instruction.

The exemplary VTOL aircraft 100 illustrated in FIGs. 1A-1C includes a pair of tilting fan assemblies 114, 124 one provided on each wing 106, 108, closer to the fuselage 102. One of ordinary skill the art will appreciate that the number and location of the tilting fan assemblies is not limited to that illustrated in FIGs. 1A-1C and that the VTOL aircraft can include less or more number of tilting fan assemblies and/or lift fan assemblies. For example, according to an illustrative example, the boom 112 may switch places with any one of the booms 104. According to yet another illustrative example, all front fan assemblies (or all aft fan assemblies) may be tilting fan assemblies.

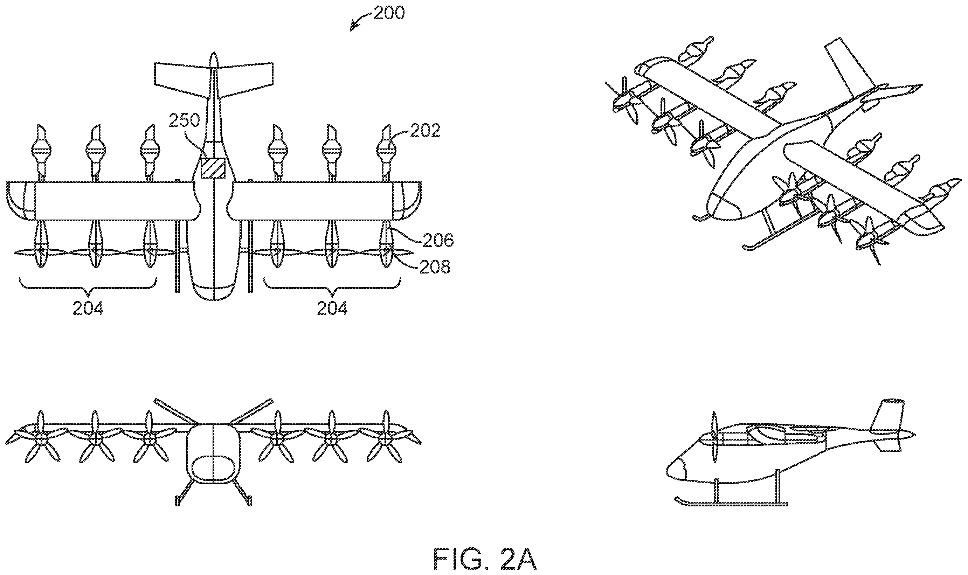

FIGs. 2A-2B illustrate an exemplary embodiment of the VTOL aircraft with tilting fan assemblies. In the exemplary embodiment illustrated in FIGs. 2A-2B, a plurality of lift fan assemblies are provided at a trailing edge of the pair of wings and a plurality of tilting fan assemblies are provided at a leading edge of the pair of wings. The exemplary VTOL aircraft 200 illustrated in FIGs. 2A-2B includes all front fan assemblies configured as tilting fan assemblies 204. Thus, in the exemplary VTOL aircraft 200, all booms 206 are identical and each includes a tilting fan assembly 204 on one end and a lift fan assembly 202 on the opposite end. Since all booms 206 are identical, the booms 206 may be interchangeable between the positions on the wings. For example, the first boom closer to the fuselage may be interchangeable with the adjacent second boom (e.g. the middle boom on the wing) or the third boom further away from the fuselage. In some embodiments, each tilting fan assembly 204 may be coupled to the boom 206 via an individual tilting mechanism 208. For example, at least three tilting fan assemblies may be coupled to each of the pair of wings, as shown in FIG. 2A.

FIG. 2A illustrates top, planar, side and front views (clockwise starting from the top left corner) of the VTOL aircraft 200 with front tilting fan assemblies 204 in the forward flight position.

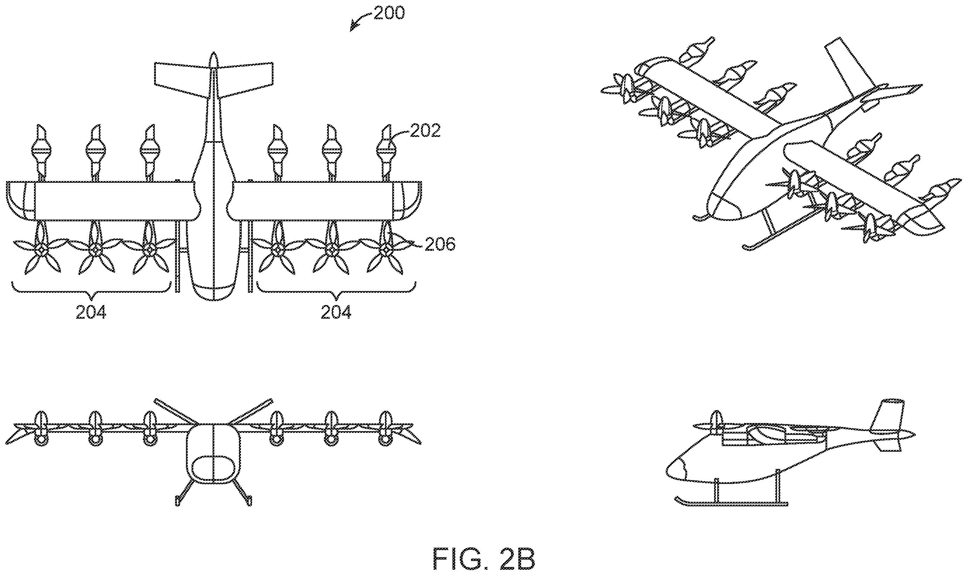

FIG. 2B illustrates top, planar, side and front views (clockwise starting from the top left corner) of the VTOL aircraft 200 with front tilting fan assemblies 204 in the vertical lift position (e.g. front tilting fan assemblies 204 facing upward toward the sky).

The control system 250 (e.g. a flight control system) coupled to the aircraft 200 may be configured to control the tilting mechanisms 208 to switch the positioning of the tilting fan assemblies 204 from the forward flight position (illustrated in FIG. 2A) to the vertical lift position (illustrated in FIG. 2B); as well as from the vertical lift position (illustrated in FIG. 2B) to the forward flight position (illustrated in FIG. 2A). According to various embodiments, the control system 250 may control the tilting fan assemblies 204 between the two positions based on sensor data and/or flight data received from the sensors (e.g. sensor measuring air temperature, electric motor temperature, airspeed of the aircraft, etc.), computers, and other input/output devices coupled to the aircraft.

The tilting fan assemblies 204 are coupled to the wings via one or more tilting mechanisms, and the tilting fan assemblies 204 may be controlled individually via the tilting mechanisms 208. The flight control system may be configured to control the tilting mechanisms 208 simultaneously so as to position all tilting fan assemblies 204 in a same position at the same time. Alternatively, the flight control system may be configured to control the tilting mechanisms 208 independently from each other. This way, the flight control system may identify one or more tilting fan assemblies 204 and control the identified tilting fan assemblies 204 independently from the rest of the tilting fan assemblies. According to various embodiments, the flight control system may use symmetric and/or asymmetric tilting to augment control during hovering and transition (e.g. transition between vertical lift and forward flight). The additional degree of freedom of tilting may augment control during motor out and nominal conditions.

While FIGs. 2A-2B illustrate the tilting fan assemblies 204 on the front (e.g. leading) edge of the wings and the lift fan assemblies 202 on the aft (e.g. trailing) edge of the wings.

In another illustrative examples not falling under the scope of the appended claims, the tilting fan assemblies 204 and the lift fan assemblies 202 may be alternated on each one of the front and rear portions of the wings. For example, the leading edge of the first wing may include a first tilting fan assembly 204, a lift fan assembly 202 and a second tilting fan assembly 204. The leading edge of the second wing may include a tilting fan assembly 204, a lift fan assembly 202 and another tilting fan assembly 204. Alternatively, the leading edge of the second wing may include a first lift fan assembly 202, a tilting fan assembly 204, and a second lift fan assembly 202. Similar configurations may be applied to the trailing edge of the first and second wings as well.

While Figs. 1A-2B illustrate the plurality of tilting fan mechanisms coupled to the wings, in alternative illustrative examples the plurality of tilting fan mechanisms may be coupled to the fuselage. For example, the plurality of tilting fan mechanisms may be coupled to one or more lateral support structures (e.g. lateral booms) that are coupled to the fuselage.

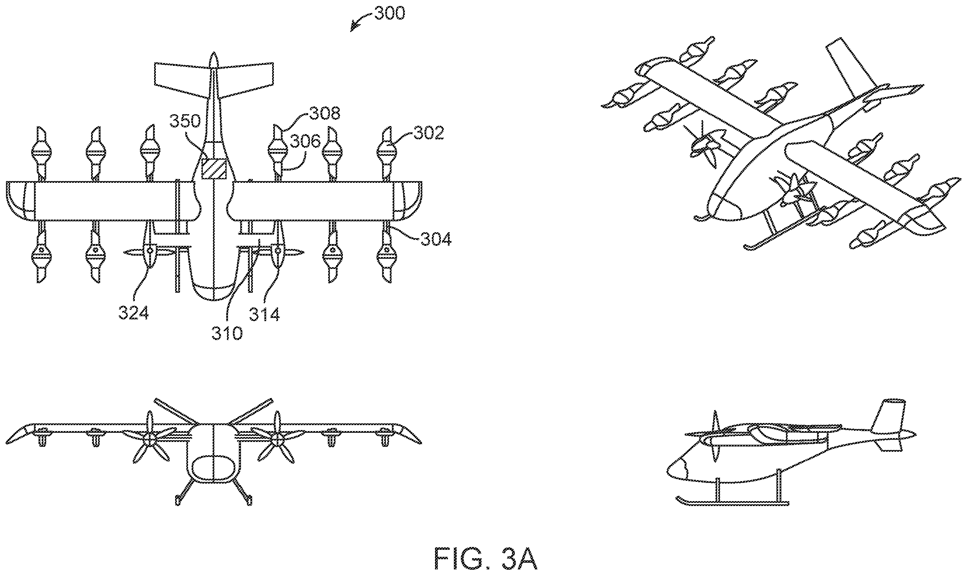

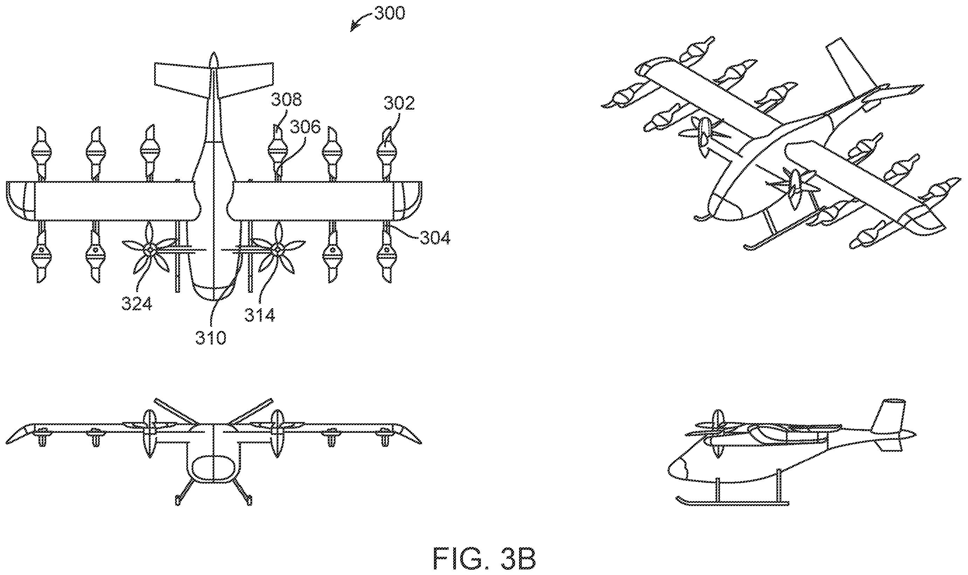

FIGs. 3A-3B illustrate another illustrative example not falling under the scope of the appended claims of the VTOL aircraft with tilting fan assemblies. The VTOL aircraft 300 illustrated in FIGs. 3A-3B includes a lateral boom 310 provided in front of the wings, closer to a nose of the aircraft. One or more tilting fan assemblies 314, 324 are coupled to the lateral boom 310. In some illustrative examples, the lateral boom 310 may be a tilting boom tilting around an axis parallel to a lateral axis of the aircraft, thereby moving the tilting fan assemblies 314, 324 at the same time between a forward flight position (illustrated in FIG. 3A) and a vertical lift position (illustrated in FIG. 3B). In such illustrative examples, it may not be necessary to couple the tilting fan assemblies 314, 324 to the lateral boom 310 via tilting mechanisms if the lateral boom itself is a tilting boom. The tilting of the lateral boom 310 may be controlled to modify the position of the tilting fan assemblies 314, 324. In other illustrative examples, both the lateral boom and the tilting fan assemblies may tilt independently from each other (e.g. the tilting fan assemblies 314 may be coupled to the tilting lateral boom via one or more tilting mechanisms).

The lateral boom 310 may be formed as a single boom or may be formed as two separate lateral booms coupled to opposite sides of the fuselage. The lateral boom(s) 310 may be coupled to the fuselage forward of the pair of wings.

Similar to the illustrative examples illustrated in FIGs. 1A-1C, the exemplary VTOL aircraft 300 illustrated in FIGs. 3A-3B includes two booms 304 each carrying a pair of lift fan assemblies 302 on each wing. The exemplary VTOL aircraft 300 further includes a shorter boom 306 coupled to each wing, extending only on one side of each wing (e.g. aft side) carrying a single lift fan assembly 308. As illustrated in FIGs. 3A-3B, the exemplary VTOL aircraft includes 10 lift fan assemblies and 2 tilting fan assemblies.

FIG. 3A illustrates top, planar, side and front views (clockwise starting from the top left corner) of the VTOL aircraft 300 with tilting fan assemblies 314, 324 in the forward flight position.

FIG. 3B illustrates top, planar, side and front views (clockwise starting from the top left corner) of the VTOL aircraft 300 with tilting fan assemblies 314, 324 in the vertical lift position.

The control system 350 (e.g. the flight control system) coupled to the aircraft 300 may be configured to control the tilting fan assemblies 314, 324 from the forward flight position (illustrated in FIG. 3A) to the vertical lift position (illustrated in FIG. 3B); as well as from the vertical lift position (illustrated in FIG. 3B) to the forward flight position (illustrated in FIG. 3A). According to various illustrative examples, , the control system may control the tilting of the tilting fan assemblies 314, 324 between the two positions based on sensor data and/or flight data received from the sensors (e.g. sensor measuring air temperature, electric motor temperature, airspeed of the aircraft, etc.), computers, and other input/output devices coupled to the aircraft.

In illustrative examples where the lateral boom 310 is a tilting boom, the control system 350 may be configured to control the tilting of the lateral boom 310 to switch the positioning of the tilting fan assemblies 314, 324 from the forward flight position (illustrated in FIG. 3A) to the vertical lift position (illustrated in FIG. 3B); as well as from the vertical lift position (illustrated in FIG. 3B) to the forward flight position (illustrated in FIG. 3A). According to various illustrative examples, the control system may control the tilting of the lateral boom 310 between the two positions based on sensor data and/or flight data received from the sensors (e.g. sensor measuring air temperature, electric motor temperature, airspeed of the aircraft, etc.), computers, and other input/output devices coupled to the aircraft.

In some illustrative examples, the lateral boom 310 may be provided behind the wings, closer to a tail of the aircraft (or on the tail of the aircraft). In such illustrative examples, the shorter boom 306 that extends only on one side of each wing carrying a single lift fan assembly 308 may extend toward the leading edge of the wing(s).

According to an alternative illustrative example, the tilting fan assemblies 314, 324 may be coupled to the lateral boom 3 10 via respective tilting mechanisms. Thus, the lateral boom 310 itself may or may not be a tilting boom. In such illustrative examples, the tilting fan assemblies 314, 324 may be controlled to switch position (between the vertical lift position and forward flight position) individually. In such illustrative examples, it may still be possible to do an emergency landing by eliminating a failed (e.g. broken or stuck) tilting fan assembly, and controlling the remaining tilting fan assemblies from a forward flight position to a vertical lift position. For example, the tilting fan assemblies 314, 324 may be individually controlled to switch position at the same time. Yet according to another example, the tilting fan assemblies 314, 324 may be individually controlled to switch position at different times (e.g. consecutively, one after another).

According to various illustrative examples, any number of lift fan assemblies may be coupled to the VTOL aircraft. For example, the aircraft may include 3 lift fan assemblies coupled to each wing (as shown in FIG. 2A), or the aircraft may include 5 lift fan assemblies coupled to each wing (as shown in FIGs. 1A and 3 A). Other illustrative examples may include no lift fan assemblies (e.g. the lift is created using the tilting fan assemblies in the vertical position, therefore the aircraft may include any number of tilting fan assemblies), 2 lift fan assemblies, 4 lift fan assemblies, or 6 (or more) lift fan assemblies. According to various illustrative examples, the combined number of lift fan assemblies and the tilting fan assemblies coupled to the aircraft may be at least 12.

In various illustrative examples, a control system such as the flight control system of the aircraft may be configured to control the actuators (rotors, aerodynamic control surfaces, the tilting fan assemblies, the lift fan assemblies) of the aircraft to cause the aircraft to transition between a vertical lift (e.g. liftoff/hovering/landing) mode and a forward flight mode. For example, the control system may be configured to receive a flight instruction, such as a liftoff instruction, a hovering instruction, a landing instruction or a forward flight instruction. If the flight instruction is a takeoff instruction or a landing instruction, the control system may control the one or more of the plurality of tilting fan assemblies that are in the forward flight position to the vertical lift position. If the flight instruction is a forward flight instruction, the control system may control the one or more of the plurality of tilting fan assemblies that are in the vertical lift position to the forward flight position. The control system may then determine a position of a plurality of tilting fan assemblies coupled to the aircraft and control one or more of the plurality of tilting fan assemblies between a vertical lift position and a forward flight position based on the flight instruction. The control system may continuously monitor the position of the plurality of tilting fan assemblies in view of the flight instruction.

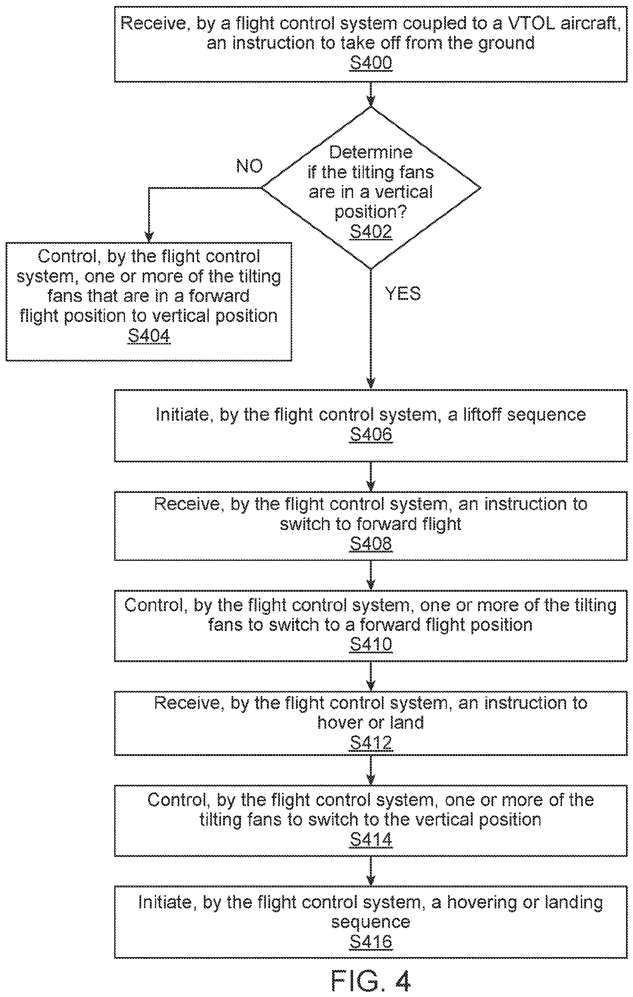

FIG. 4 is a flow chart illustrating an embodiment of a process to control flight of a VTOL aircraft configured for vertical takeoff and landing through a transition between vertical lift and forward flight.

At step S400, the aircraft may be in a stationary position on the ground. For example, the aircraft may be parked at a charging station for charging the batteries. Alternatively, the aircraft may be parked at a location awaiting to receive cargo or passengers. The flight control system of the VTOL aircraft may receive a flight plan (e.g. from the autopilot, a pilot or a remote controller pilot) to arrive at a predetermined destination. The flight plan may include an instruction to takeoff from the ground.

At step S402, the flight control system may determine whether all tilting fan assemblies of the aircraft are in a vertical lift position. According to various embodiments, it may be desirable to have all fan assemblies in the vertical lift position to create a vertical lift. In some embodiments, the aircraft may be configured to keep all tilting fan assemblies in a vertical lift position when the aircraft is not in use (e.g. is parked on the ground or is being charged).

If it is determined, at step S402, that not all fan assemblies are in a vertical lift position, the flight control system may control one or more of the tilting fan assemblies that are in a forward flight position to switch to a vertical lift position (step S404). For example, one or more of the tilting fan assemblies may have been switched to the forward flight position while the aircraft was on the ground for testing or maintenance purposes.

At step S406, the flight control system may initiate a takeoff sequence to lift the aircraft off of the ground. During the takeoff sequence, the lift fan mechanisms and the tilting fan mechanisms in a vertical lift position may all be activated.

At step S408, after a certain amount of time has passed since performing step S406, the flight control system may receive an instruction to transition to forward flight. Before switching to the forward flight mode, the control system may check one or more of the altitude, speed and orientation of the aircraft to ensure that the parameters are within a predetermined, desirable range. In some embodiments, the control system may communicate the parameters to a remote entity (e.g. a remote control tower. a remote pilot).

In various embodiments, transition to forward flight may be effected by attaining a desired altitude (e.g., design minimum or greater than a threshold) and rotating the tilting fan assemblies substantially continuously to a forward flight position, while adjusting power to the rotors as required to maintain stability and altitude while increasing forward airspeed as the tilting fan assemblies are rotated into the forward flight position and begin to generate sufficient lift to maintain altitude.

Upon receiving the instruction to transition to forward flight, at step S410, the control system may control one or more of the tilting fan assemblies to switch from a vertical lift position to a forward flight position. In some embodiments, the tilting fan assemblies may be controlled substantially simultaneously.

At step S412, the control system may receive an instruction (e.g. from the autopilot, a pilot or a remote entity) to hover or to land. In response, at step S414, the flight control system may control one or more of the tilting fan assemblies to switch from the forward flight position to the vertical lift position. At step S416, the flight control system may initiate a hovering or landing sequence to hover or land the aircraft on the ground.

The various illustrative examples and embodiments discussed herein are illustrated in FIGs. 1A-3B using an aircraft with a specific tail. However, the embodiments are not limited to the specific tail or aircraft configuration illustrated in the figures. One or ordinary skill in the art will appreciate that the embodiments can be combined with aircraft with alternative tails or with alternative designs, including but not limited to an aircraft with a conventional tail, an aircraft with multiple tails, or an aircraft with no tail.

For simplicity, various active and passive circuitry components are not shown in the figures. In the foregoing specification, embodiments of the disclosure have been described with reference to numerous specific details that can vary from implementation to implementation. The specification and drawings are, accordingly, to be regarded in an illustrative rather than a restrictive sense. The sole and exclusive indicator of the scope of the disclosure, and what is intended by the applicants to be the scope of the disclosure, is the literal scope of the set of claims that issue from this application. The specific details of particular embodiments can be combined in any suitable manner without departing from the scope of embodiments of the disclosure.

Electronic components of the described embodiments may be specially constructed for the required purposes, or may comprise one or more general-purpose computers selectively activated or reconfigured by a computer program stored in the computer. Such a computer program may be stored in a computer readable storage medium, such as, but is not limited to, any type of disk including floppy disks, optical disks, DVDs, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus.

Additionally, spatially relative terms, such as "front or "back" and the like can be used to describe an element and/or feature's relationship to another element(s) and/or feature(s) as, for example, illustrated in the figures. It will be understood that the spatially relative terms are intended to encompass different orientations of the device in use and/or operation in addition to the orientation depicted in the figures. For example, if the device in the figures is turned over, elements described as a "front" surface can then be oriented "back" from other elements or features. The device can be otherwise oriented (e.g., rotated 90 degrees or at other orientations) and the spatially relative descriptors used herein interpreted accordingly.

## Claims

1. An aircraft (100) comprising:
a fuselage (102);
a pair of wings (106, 108) coupled to opposite sides of the fuselage (102);
a plurality of lift fan assemblies (202) coupled to the pair of wings, wherein the plurality of lift fan assemblies are configured to create a vertical lift;
a plurality of tilting fan assemblies (204) coupled to the pair of wings (106, 108), wherein the plurality of tilting fan assemblies are configured to move between a vertical lift position and a forward flight position, wherein the plurality of tilting fan assemblies are configured to create a vertical lift when in the vertical lift position;
three booms (206) coupled to an underside of each one of the pair of wings, wherein each lift fan assembly (202) among the plurality of lift fan assemblies is mounted in a fixed position relative to the pair of wings at a first end of each boom (206) such that an orientation of the lift fan assemblies is fixed, and each tilting fan assembly (204) among the plurality of tilting fan assemblies is mounted at a second end of each boom (206) via a tilting mechanism (208), wherein all booms are identical in that each boom includes a lift fan assembly (202) on the first end and a tilting fan assembly (204) on the second end;
wherein the plurality of lift fan assemblies are provided at a trailing edge of the pair of wings and the plurality of tilting fan assemblies are provided at a leading edge of the pair of wings;
one or more battery units (135) including a plurality of battery cells configured to power the plurality of tilting fan assemblies;
a control system (150) configured to control the plurality of tilting fan assemblies between the vertical lift position and the forward flight position, wherein the control system is configurable to control a position of the tilting fan assemblies automatically and/or based on flight data received by sensors coupled to the aircraft; and
wherein the fuselage includes a cabin section (140) configured to carry passengers.

2. The aircraft (100) of claim 1, wherein the control system (150) is configurable to control a first tilting fan assembly and a second tilting fan assembly among the plurality of tilting fan assemblies independently from each other.

3. The aircraft (100) of claim 1, wherein the control system (150) is configurable to control at least a subset of the plurality of tilting fan assemblies simultaneously.

4. The aircraft (100) of claim 1, further comprising:
a tailplane (130) in form of a V-tail coupled to a rear end of the fuselage (102).

5. A method of controlling one or more tilting fan assemblies of an aircraft (100), wherein the aircraft comprises three booms (206) coupled to an underside of each one of the pair of wings, wherein a lift fan assembly (202) is mounted in a fixed position relative to the pair of wings to a first end of each boom (206) such that an orientation of the lift fan assemblies is fixed, and a tilting fan assembly (204) is mounted to a second end of each boom via a tilting mechanism, wherein the aircraft is configured for vertical takeoff and landing, wherein all booms are identical in that each boom includes a lift fan assembly (202) on the first end and a tilting fan assembly (204) on the second end, wherein the aircraft further comprises a fuselage including a cabin section (140) configured to carry passengers, the method comprising:
receiving, by a control system (150) coupled to the aircraft, a flight instruction;
determining, by the control system, a position of the plurality of tilting fan assemblies coupled to the aircraft;
controlling, by the control system, one or more of the plurality of tilting fan assemblies between a vertical lift position and a forward flight position based on the flight instruction, wherein the plurality of lift fan assemblies are provided at a trailing edge of the pair of wings and the plurality of tilting fan assemblies are provided at a leading edge of the pair of wings; and
continuously monitoring, by the control system, the position of the plurality of tilting fan assemblies in view of the flight instruction.

6. The method of claim 5, further comprising:
controlling, by the control system (150), a first tilting fan assembly and a second tilting fan assembly among the plurality of tilting fan assemblies (204) independently from each other.

7. The method of claim 5, further comprising:
controlling, by the control system (150), at least a subset of the plurality of tilting fan assemblies (204) simultaneously.

8. The method of claim 5, further comprising:
controlling, by the control system (150), the position of the plurality of tilting fan assemblies (204) automatically.

9. The method of claim 5, wherein the flight instruction is a takeoff instruction, and wherein controlling the one or more of the plurality of tilting fan assemblies (204) comprises:
determining whether each of the plurality of tilting fan assemblies is in a vertical lift position; and
controlling the one or more of the plurality of tilting fan assemblies to the vertical lift position.

10. The method of claim 5, wherein:
when the flight instruction is a hover instruction or a landing instruction, controlling the one or more of the plurality of tilting fan assemblies (204) comprises:
controlling the one or more of the plurality of tilting fan assemblies to the vertical lift position; and
when the flight instruction is an instruction to switch to forward flight, controlling the one or more of the plurality of tilting fan assemblies comprises:
controlling the one or more of the plurality of tilting fan assemblies to the forward flight position.

11. The method of claim 10, further comprising:
controlling one or more of a plurality of lift fan assemblies (202) to stop operating during a forward flight of the aircraft (100).

12. The method of claim 5, further comprising:
receiving, by the control system (150), flight data from one or more sensors coupled to the aircraft (100); and
controlling the position of the plurality of tilting fan assemblies (204) based on the flight data received from the one or more sensors coupled to the aircraft.

## Patentansprüche

1. Luftfahrzeug (100), das Folgendes umfasst:
einen Rumpf (102);
ein Paar Tragflächen (106, 108), die mit gegenüberliegenden Seiten des Rumpfs (102) gekoppelt sind;
eine Vielzahl von Hubrotorbaueinheiten (202), die mit dem Paar Tragflächen gekoppelt ist, wobei die Vielzahl von Hubrotorbaueinheiten dazu konfiguriert ist, einen vertikalen Auftrieb zu erzeugen;
eine Vielzahl von Kipprotorbaueinheiten (204), die mit dem Paar Tragflächen (106, 108) gekoppelt ist, wobei die Vielzahl von Kipprotorbaueinheiten dazu konfiguriert ist, sich zwischen einer Vertikalauftriebsstellung und einer Vorwärtsflugstellung zu bewegen, wobei die Vielzahl von Kipprotorbaueinheiten dazu konfiguriert ist, einen vertikalen Auftrieb zu erzeugen, wenn sie sich in der Vertikalauftriebsstellung befinden;
drei Ausleger (206), die mit einer Unterseite jeder Tragfläche des Paars Tragflächen gekoppelt sind, wobei jede Hubrotorbaueinheit (202) aus der Vielzahl von Hubrotorbaueinheiten in einer festen Stellung relativ zu dem Paar Tragflächen an einem ersten Ende jedes Auslegers (206) montiert ist, sodass eine Ausrichtung der Hubrotorbaueinheiten fest ist, und jede Kipprotorbaueinheit (204) aus der Vielzahl von Kipprotorbaueinheiten über einen Kippmechanismus (208) an einem zweiten Ende jedes Auslegers (206) montiert ist, wobei alle Ausleger identisch sind, insofern als jeder Ausleger eine Hubrotorbaueinheit (202) an dem ersten Ende und eine Kipprotorbaueinheit (204) an dem zweiten Ende aufweist;
wobei die Vielzahl von Hubrotorbaueinheiten an einer Hinterkante des Paars Tragflächen vorgesehen ist und die Vielzahl von Kipprotorbaueinheiten an einer Vorderkante des Paars Tragflächen vorgesehen ist;
eine oder mehrere Batterieeinheiten (135), die eine Vielzahl von Batteriezellen aufweisen, die dazu konfiguriert ist, die Vielzahl von Kipprotorbaueinheiten mit Strom zu versorgen;
ein Steuersystem (150), das dazu konfiguriert ist, die Vielzahl von Kipprotorbaueinheiten zwischen der Vertikalauftriebsstellung und der Vorwärtsflugstellung zu steuern, wobei das Steuersystem dazu konfigurierbar ist, eine Stellung der Kipprotorbaueinheiten automatisch und/oder basierend auf Flugdaten, die durch mit dem Luftfahrzeug gekoppelte Sensoren empfangen werden, zu steuern; und
wobei der Rumpf einen Kabinenabschnitt (140) aufweist, der dazu konfiguriert ist, Passagiere zu befördern.

2. Luftfahrzeug (100) nach Anspruch 1, wobei das Steuersystem (150) dazu konfigurierbar ist, eine erste Kipprotorbaueinheit und eine zweite Kipprotorbaueinheit aus der Vielzahl von Kipprotorbaueinheiten unabhängig voneinander zu steuern.

3. Luftfahrzeug (100) nach Anspruch 1, wobei das Steuersystem (150) dazu konfigurierbar ist, mindestens eine Teilmenge der Vielzahl von Kipprotorbaueinheiten gleichzeitig zu steuern.

4. Luftfahrzeug (100) nach Anspruch 1, das ferner Folgendes umfasst:
ein Höhenleitwerk (130) in Form eines V-Leitwerks, das mit einem hinteren Ende des Rumpfs (102) gekoppelt ist.

5. Verfahren zum Steuern einer oder mehrerer Kipprotorbaueinheiten eines Luftfahrzeugs (100), wobei das Luftfahrzeug drei Ausleger (206), die mit einer Unterseite jeder Tragfläche des Paars Tragflächen gekoppelt sind, umfasst, wobei eine Hubrotorbaueinheit (202) in einer festen Stellung relativ zu dem Paar Tragflächen an einem ersten Ende jedes Auslegers (206) montiert ist, sodass eine Ausrichtung der Hubrotorbaueinheiten fest ist, und eine Kipprotorbaueinheit (204) über einen Kippmechanismus an einem zweiten Ende jedes Auslegers montiert ist, wobei das Luftfahrzeug für einen Senkrechtstart und eine Senkrechtlandung konfiguriert ist, wobei alle Ausleger identisch sind, insofern als jeder Ausleger eine Hubrotorbaueinheit (202) an dem ersten Ende und eine Kipprotorbaueinheit (204) an dem zweiten Ende aufweist, wobei das Luftfahrzeug ferner einen Rumpf umfasst, der einen Kabinenabschnitt (140) aufweist, der dazu konfiguriert ist, Passagiere zu befördern, wobei das Verfahren Folgendes umfasst:
Empfangen, durch ein mit dem Luftfahrzeug gekoppeltes Steuersystem (150), einer Fluganweisung;
Bestimmen, durch das Steuersystem, einer Stellung der Vielzahl von mit dem Luftfahrzeug gekoppelten Kipprotorbaueinheiten;
Steuern, durch das Steuersystem, einer oder mehrerer der Vielzahl von Kipprotorbaueinheiten zwischen einer Vertikalauftriebsstellung und einer Vorwärtsflugstellung basierend auf der Fluganweisung, wobei die Vielzahl von Hubrotorbaueinheiten an einer Hinterkante des Paars Tragflächen vorgesehen ist und die Vielzahl von Kipprotorbaueinheiten an einer Vorderkante des Paars Tragflächen vorgesehen ist; und
kontinuierliches Überwachen, durch das Steuersystem, der Stellung der Vielzahl von Kipprotorbaueinheiten im Hinblick auf die Fluganweisung.

6. Verfahren nach Anspruch 5, das ferner Folgendes umfasst:
Steuern, durch das Steuersystem (150), einer ersten Kipprotorbaueinheit und einer zweiten Kipprotorbaueinheit aus der Vielzahl von Kipprotorbaueinheiten (204) unabhängig voneinander.

7. Verfahren nach Anspruch 5, das ferner Folgendes umfasst:
gleichzeitiges Steuern, durch das Steuersystem (150), mindestens einer Teilmenge der Vielzahl von Kipprotorbaueinheiten (204).

8. Verfahren nach Anspruch 5, das ferner Folgendes umfasst:
automatisches Steuern, durch das Steuersystem (150), der Stellung der Vielzahl von Kipprotorbaueinheiten (204).

9. Verfahren nach Anspruch 5, wobei die Fluganweisung eine Startanweisung ist und wobei das Steuern der einen oder der mehreren der Vielzahl von Kipprotorbaueinheiten (204) Folgendes umfasst:
Bestimmen, ob sich jede der Vielzahl von Kipprotorbaueinheiten in einer Vertikalauftriebsstellung befindet; und
Steuern der einen oder der mehreren der Vielzahl von Kipprotorbaueinheiten in die Vertikalauftriebsstellung.

10. Verfahren nach Anspruch 5, wobei:
wenn die Fluganweisung eine Schwebefluganweisung oder eine Landeanweisung ist, das Steuern der einen oder der mehreren der Vielzahl von Kipprotorbaueinheiten (204) Folgendes umfasst:
Steuern der einen oder der mehreren der Vielzahl von Kipprotorbaueinheiten in die Vertikalauftriebsstellung; und,
wenn die Fluganweisung eine Anweisung zum Wechseln in den Vorwärtsflug ist, das Steuern der einen oder der mehreren der Vielzahl von Kipprotorbaueinheiten Folgendes umfasst:
Steuern der einen oder der mehreren der Vielzahl von Kipprotorbaueinheiten in die Vorwärtsflugstellung.

11. Verfahren nach Anspruch 10, das ferner Folgendes umfasst:
Steuern einer oder mehrerer einer Vielzahl von Hubrotorbaueinheiten (202), um den Betrieb während eines Vorwärtsflugs des Luftfahrzeugs (100) zu beenden.

12. Verfahren nach Anspruch 5, das ferner Folgendes umfasst:
Empfangen, durch das Steuersystem (150), von Flugdaten von einem oder mehreren mit dem Luftfahrzeug (100) gekoppelten Sensoren; und
Steuern der Stellung der Vielzahl von Kipprotorbaueinheiten (204) basierend auf den Flugdaten, die von dem einen oder den mehreren mit dem Luftfahrzeug gekoppelten Sensoren empfangen werden.

## Revendications

1. Aéronef (100), comportant :
un fuselage (102) ;
une paire d'ailes (106, 108) accouplées à des côtés opposés du fuselage (102) ;
une pluralité d'ensembles formant ventilateur de sustentation (202) accouplés à la paire d'ailes, dans lequel les ensembles de la pluralité d'ensembles formant ventilateur de sustentation sont configurés pour créer une sustentation verticale ;
une pluralité d'ensembles formant ventilateur basculant (204) accouplés à la paire d'ailes (106, 108), dans lequel les ensembles de la pluralité d'ensembles formant ventilateur basculant sont configurés à des fins de déplacement entre une position de sustentation verticale et une position de vol en translation, dans lequel les ensembles de la pluralité d'ensembles formant ventilateur basculant sont configurés pour créer une sustentation verticale quand ils sont dans la position de sustentation verticale ;
trois poutres (206) accouplées à une face inférieure de chacune de la paire d'ailes, dans lequel chaque ensemble formant ventilateur de sustentation (202) parmi la pluralité d'ensembles formant ventilateur de sustentation est monté dans une position fixe par rapport à la paire d'ailes au niveau d'une première extrémité de chaque poutre (206) de telle sorte qu'une orientation des ensembles formant ventilateur de sustentation est fixe, et chaque ensemble formant ventilateur basculant (204) parmi la pluralité d'ensembles formant ventilateur basculant est monté au niveau d'une deuxième extrémité de chaque poutre (206) par le biais d'un mécanisme de basculement (208), dans lequel toutes les poutres sont identiques en ce sens que chaque poutre comprend un ensemble formant ventilateur de sustentation (202) sur la première extrémité et un ensemble formant ventilateur basculant (204) sur la deuxième extrémité ;
dans lequel les ensembles de la pluralité d'ensembles formant ventilateur de sustentation sont mis en œuvre au niveau d'un bord de fuite de la paire d'ailes et les ensembles de la pluralité d'ensembles formant ventilateur basculant sont mis en œuvre au niveau d'un bord d'attaque de la paire d'ailes ;
une ou plusieurs unités de batterie (135) comprenant une pluralité d'éléments de batterie configurés pour alimenter la pluralité d'ensembles formant ventilateur basculant ;
un système de commande (150) configuré pour commander la pluralité d'ensembles formant ventilateur basculant entre la position de sustentation verticale et la position de vol en translation, dans lequel le système de commande est en mesure d'être configuré pour commander une position des ensembles formant ventilateur basculant automatiquement et/ou sur la base de données de vol reçues par des capteurs accouplés à l'aéronef ; et
dans lequel le fuselage comprend une section formant cabine (140) configurée pour transporter des passagers.

2. Aéronef (100) selon la revendication 1, dans lequel le système de commande (150) est en mesure d'être configuré pour commander un premier ensemble formant ventilateur basculant et un deuxième ensemble formant ventilateur basculant parmi la pluralité d'ensembles formant ventilateur basculant indépendamment l'un de l'autre.

3. Aéronef (100) selon la revendication 1, dans lequel le système de commande (150) est en mesure d'être configuré pour commander simultanément au moins un sous-ensemble de la pluralité d'ensembles formant ventilateur basculant.

4. Aéronef (100) selon la revendication 1, comportant par ailleurs :
un empennage (130) se présentant sous la forme d'une queue en V accouplée à une extrémité arrière du fuselage (102).

5. Procédé de commande d'un ou de plusieurs ensembles formant ventilateur basculant d'un aéronef (100), dans lequel l'aéronef comporte trois poutres (206) accouplées à une face inférieure de chacune de la paire d'ailes, dans lequel un ensemble formant ventilateur de sustentation (202) est monté dans une position fixe par rapport à la paire d'ailes à une première extrémité de chaque poutre (206) de telle sorte qu'une orientation des ensembles formant ventilateur de sustentation est fixe, et un ensemble formant ventilateur basculant (204) est monté à une deuxième extrémité de chaque poutre par le biais d'un mécanisme de basculement, dans lequel l'aéronef est configuré pour un décollage vertical et un atterrissage vertical, dans lequel toutes les poutres sont identiques en ce sens que chaque poutre comprend un ensemble formant ventilateur de sustentation (202) sur la première extrémité et un ensemble formant ventilateur basculant (204) sur la deuxième extrémité, dans lequel l'aéronef comporte par ailleurs un fuselage comprenant une section formant cabine (140) configurée pour transporter des passagers, le procédé comportant les étapes consistant à :
recevoir, par un système de commande (150) accouplé à l'aéronef, une instruction de vol ;
déterminer, par le système de commande, une position de la pluralité d'ensembles formant ventilateur basculant accouplés à l'aéronef ;
commander, par le système de commande, un ou plusieurs ensembles de la pluralité d'ensembles formant ventilateur basculant entre une position de sustentation verticale et une position de vol en translation sur la base de l'instruction de vol, dans lequel les ensembles de la pluralité d'ensembles formant ventilateur de sustentation sont mis en œuvre au niveau d'un bord de fuite de la paire d'ailes et les ensembles de la pluralité d'ensembles formant ventilateur basculant sont mis en œuvre au niveau d'un bord d'attaque de la paire d'ailes ; et
surveiller en continu, par le système de commande, la position de la pluralité d'ensembles formant ventilateur basculant en vue de l'instruction de vol.

6. Procédé selon la revendication 5, comportant par ailleurs l'étape consistant à :
commander, par le système de commande (150), un premier ensemble formant ventilateur basculant et un deuxième ensemble formant ventilateur basculant parmi la pluralité d'ensembles formant ventilateur basculant (204) indépendamment l'un de l'autre.

7. Procédé selon la revendication 5, comportant par ailleurs l'étape consistant à :
commander, par le système de commande (150), simultanément au moins un sous-ensemble de la pluralité d'ensembles formant ventilateur basculant (204).

8. Procédé selon la revendication 5, comportant par ailleurs l'étape consistant à :
commander, par le système de commande (150), automatiquement la position de la pluralité d'ensembles formant ventilateur basculant (204).

9. Procédé selon la revendication 5, dans lequel l'instruction de vol est une instruction de décollage, et dans lequel l'étape consistant à commander lesdits un ou plusieurs ensembles de la pluralité d'ensembles formant ventilateur basculant (204) comporte les étapes consistant à :
déterminer si chaque ensemble de la pluralité d'ensembles formant ventilateur basculant est dans une position de sustentation verticale ; et
commander lesdits un ou plusieurs ensembles de la pluralité d'ensembles formant ventilateur basculant en position de sustentation verticale.

10. Procédé selon la revendication 5, dans lequel :
quand l'instruction de vol est une instruction de vol stationnaire ou une instruction d'atterrissage, l'étape consistant à commander lesdits un ou plusieurs ensembles de la pluralité d'ensembles formant ventilateur basculant (204) comporte l'étape consistant à :
commander lesdits un ou plusieurs ensembles de la pluralité d'ensembles formant ventilateur basculant en position de sustentation verticale ; et
quand l'instruction de vol est une instruction de passage au vol en translation, l'étape consistant à commander lesdits un ou plusieurs ensembles de la pluralité d'ensembles formant ventilateur basculant comporte l'étape consistant à :
commander lesdits un ou plusieurs ensembles de la pluralité d'ensembles formant ventilateur basculant en position de vol en translation.

11. Procédé selon la revendication 10, comportant par ailleurs l'étape consistant à :
commander un ou plusieurs ensembles d'une pluralité d'ensembles formant ventilateur de sustentation (202) pour qu'ils arrêtent de fonctionner pendant un vol en translation de l'aéronef (100).

12. Procédé selon la revendication 5, comportant par ailleurs les étapes consistant à :
recevoir, par le système de commande (150), des données de vol en provenance d'un ou de plusieurs capteurs accouplés à l'aéronef (100) ; et
commander la position de la pluralité d'ensembles formant ventilateur basculant (204) sur la base des données de vol reçues en provenance desdits un ou plusieurs capteurs accouplés à l'aéronef.
